# EUROPÄISCHE PATENTANMELDUNG

(11) **EP 2 154 414 A1**
(43) Veröffentlichungstag der Anmeldung: **17.02.2010**
(21) Anmeldenummer: 08405196.0
(22) Anmeldetag: 12.08.2008
(51) Int. Cl.: F16M 7/00

(54) **Verfahren und Vorrichtung zur Befestigung eines Bauteils**

(71) Anmelder: Schneeberger Holding AG, 4914 Roggwil (CH)
(72) Erfinder: Die Erfindernennung liegt noch nicht vor
(74) Vertreter: EGLI-EUROPEAN PATENT ATTORNEYS

(57) **Zusammenfassung**

Das Verfahren zur Herstellung einer Befestigungsstruktur für ein Bauteil (2) beruht darauf, dass in einem im Gussverfahren herzustellenden Grundkörper (1) wenigstens ein Haltemittel (3) für das Bauteil in dem Grundkörper (1) angeordnet wird. Das Haltemittel (3) wird derart angeordnet, dass das Haltemittel (3) zumindest teilweise über eine Oberfläche (7) des Grundkörpers (1) hervorsteht. Die Vorrichtung zur Befestigung eines Bauteils umfasst entsprechend wenigstens ein Haltemittel (3), welches in einem gegossenen Grundkörper (1) zur Aufnahme des Bauteils (2) derart angeordnet ist, dass das Haltemittel (3) zumindest teilweise über eine Oberfläche (7) des Grundkörpers hervorsteht.

## Beschreibung

Die Erfindung betrifft ein Verfahren nach dem Oberbegriff des Anspruchs 1. Weiterhin betrifft die Erfindung eine Vorrichtung nach dem Oberbegriff des Anspruchs 12.

Im Präzisionsmaschinenbau werden zur Halterung von Bauteilen nicht nur einfache Unterkonstruktionen gewählt, sondern grosse und schwere als Fundamente dienende Bauteilträger. Regelmässig wird hierfür Stein, insbesondere Granit, gewählt, da das Material Stein einen nur geringen Wärmeausdehnungskoeffizienten aufweist und die Bauteile vor Schwingungen oder Erschütterung bewahrt.

In den letzten Jahren ist man hingegen dazu übergegangen, die aus Stein gebildeten Bauteilträger durch im Gussverfahren hergestellte Grundkörper zu ersetzen. Dabei hat sich als besonders vorteilhaft der Mineralguss erwiesen, bei dem ein Bindemittel mit einem Füllstoff aus einer Mischung aus Steinen oder gebrochenem Gestein zu den gewünschten Formen gegossen wird. Als Bindemittel wird in der Regel Kunststoff, wie beispielsweise Polymer oder Epoxidharz verwendet. Mit der Möglichkeit des Giessens eines Bauteilträgers konnten auch die Abmessungen verringert werden, unter gleichzeitiger Beibehaltung der Vorteile, die das Material Stein bietet.

Zur Aufnahme und Ausrichtung von aufzunehmenden Bauteilen werden die Oberflächen dieser Mineralgusskörper plangeschliffen, wobei auf die spätere Ausrichtung zu achten ist. Das bedeutet, dass grossflächig die Oberflächen zu bearbeiten sind, insbesondere dann, wenn längliche Bauteile, wie beispielsweise Schienen, auf den Mineralgusskörpern angeordnet sind.

Weiterhin ist aus dem Stand der Technik bekannt, in die Mineralgusskörper Einlagen einzugiessen, an denen die Bauteile angelenkt werden. Die Einlagen schliessen mit ihrer Oberfläche mit einer Oberfläche des Mineralgusskörpers ab, um eine einheitlich plane Oberfläche zu erzeugen. Die Einlagen sind derart ausgebildet, dass die Bauteile an diese angelenkt, beispielsweise verschraubt, werden können. Die Einlagen bestehen für gewöhnlich aus Metall, womit gleiche Materialeigenschaften von Verbindungsmittel und Haltemittel gewährleistet ist.

Nachteilig bei dieser Art von Befestigungsstrukturen ist eine Oberfläche des Mineralgusskörpers aus unterschiedlichen Materialien. Die Oberfläche muss nach wie vor grossflächig zur Aufnahme des Bauteils bearbeitet werden, wobei die unterschiedlichen Materialeigenschaften des Mineralgusses und der Einlage zu einem erheblichen Mehraufwand bei Material und Kosten führt.

Der Erfindung liegt deshalb die Aufgabe zugrunde, ein Verfahren und eine Vorrichtung bereitzustellen, mit denen eine Befestigungsstruktur geschaffen wird, bei der ein Bauteil leicht und doch präzise mit einem Mineralgusskörper verbunden werden kann.

Ein Verfahren zur Lösung dieser Aufgabe weist die Merkmale des Anspruchs 1 auf. Danach steht ein Haltemittel zumindest teilweise über eine Oberfläche des Grundkörpers hervor. Durch das Hervorstehen des Haltemittels über den Grundkörper ist es ausreichend, nur jeweils das Haltemittel selbst zu bearbeiten und dessen Oberfläche entsprechend auszurichten. Das Haltemittel wird während des Gussverfahrens zu einem Grossteil innerhalb der Abmessungen des Grundkörpers positioniert, womit das Haltemittel nach dem Aushärten einer Giessmasse mit dem Grundkörper fest verbunden ist. Das Haltemittel wird beim Giessen mit einem kleinen Abschnitt ausserhalb der Abmessungen des Grundkörpers positioniert, wodurch dieser Teil nach dem Aushärten sich über den Grundkörper hinaus erstreckt.

Nach einer vorteilhaften Ausgestaltung der Erfindung werden in den Grundkörper vorzugsweise mehrere nebeneinander angeordnete Haltemittel eingegossen. Die Haltemittel dienen dabei nicht nur der Halterung des aufzunehmenden Bauteils, sondern auch als eine Auflage für das selbige. Je nach Ausführungsform des Bauteils werden mehr oder weniger viele Haltemittel in dem Mineralgusskörper angeordnet. Aufgrund des besonderen Herstellungsverfahrens des Mineralgusskörpers werden die nebeneinander angeordneten Haltemittel gleichzeitig in den Grundkörper eingegossen.

Besonders vorteilhaft erweist es sich, wenn die nebeneinander angeordneten Haltemittel beabstandet voneinander sind. Wegen der thermischen Ausdehnung der Haltemittel ist darauf zu achten, dass die nebeneinander angeordneten Haltemittel sich nicht berühren. Demnach wird jedes Haltemittel von der Giessmasse des Mineralgusskörpers im Bereich der Mantelflächen, zumindest an den Flächen, die in den Abmessungen des Grundkörpers positioniert sind, umschlossen. Zudem dient die vollständige Umschliessung der Haltemittel auch einer besseren Verbindung von Haltemittel mit Mineralgusskörper.

Vorteilhafterweise sind die Haltemittel zylindrisch ausgebildet, wodurch sich eine gleichmässig in alle Richtungen ergebene Ausdehnung ergibt. Dieses ist insbesondere hinsichtlich des Wärmeausdehnungskoeffizienten von Vorteil. Bei anderen als zylindrischen oder im Querschnitt runden Abmessungen des Haltemittels könnten Verspannungen auftreten, die eine ungleiche Verschiebung der zueinander angeordneten Haltemittel zur Folge hätte. Weiterhin werden die Haltemittel in etwa senkrecht zu der Oberfläche des Grundkörpers angeordnet.

Nach einer bevorzugten Ausführungsform stehen die nebeneinander angeordneten Haltemittel zumindest teilweise um die gleiche Länge über die Oberfläche des Grundkörpers hervor. Dadurch liegen obere Enden, der über die Oberfläche des Grundkörpers hervorstehenden Halterungen in einer Ebene. Durch die zylindrische Ausbildung der Haltemittel weisen die oberen Enden ebenfalls eine plane Oberfläche auf. Durch die gleichmässige Positionierung der Haltemittel, zumindest im Bereich der oberen Enden, bilden die Oberflächen eine plane Ebene, auf die das Bauteil angeordnet werden kann. Hierdurch kann beispielsweise eine Bearbeitung und Ausrichtung der Oberfläche vermieden werden.

Vorteilhafterweise sind die Haltemittel aus Aluminium, Stahl oder anderen metallischen Legierungen gebildet. Durch den Einsatz von beispielsweise Aluminium als Haltemittel ist somit ein kontinuierlicher Übergang des E-Moduls und der Festigkeit von Bauteil über Haltemittel und Mineralgusskörper möglich. Für gewöhnlich werden die Bauteile aus Stahl gefertigt, so dass der E-Modul über die drei Materialien zum Mineralgusskörper hin abnimmt.

Nach einer bevorzugten Ausführungsform werden die Haltemittel nach dem Eingiessen in den Grundkörper an ihren oberen Enden zur Bildung einer Ebene bearbeitet, beispielsweise abgeschliffen oder gefräst. Aufgrund von Einbautoleranzen und anderen Unwägbarkeiten beim Einbau der Haltemittel, können Abweichungen aus der durch die oberen Enden gebildeten Ebene auftreten. Zur Egalisierung dieser Abweichungen werden die oberen Enden nachbehandelt und entsprechend abgefräst oder abgeschliffen. Hierfür ist es notwendig, dass das Material der Haltemittel aus einem abrasiven Material besteht zur erleichterten Bearbeitung. Die Haltemittel werden derart bearbeitet, dass nach der Bearbeitung eine plane Ebene durch die Oberflächen der zylindrischen Haltemittel verläuft. Besonders vorteilhaft ist diese Ausgestaltung im Hinblick auf den Stand der Technik, da die Haltemittel über den Grundkörper hinausragen und somit nur die Haltemittel selbst abgeschliffen werden müssen. Eventuelle Unebenheiten im Mineralgusskörper können so unbeachtet bleiben, da ausschliesslich die Oberflächen der Haltemittel zur Erzeugung einer planen Ebene bearbeitet werden. Die im Stand der Technik auftretenden Nachteile einer grossflächigen Nachbearbeitung der Grundkörperoberfläche wird mit dieser Anordnung umgangen.

Bevorzugt ist das Bauteil als eine Führungsschiene ausgeführt, beispielsweise als Führungsschiene eines Linearführungssystems, wobei die Führungsschiene auf die oberen Enden der Haltemittel angeordnet wird und auf diesen zumindest teilweise fixiert wird. Längliche Bauteile, insbesondere Führungsschienen, bedürfen einer sehr genauen Ausrichtung ihres Unterbaus, vor allem wenn die Führungsschiene durchgehend gelagert sein soll, ist eine besonders präzise Bearbeitung des Unterbaus notwendig. Deshalb ist es notwendig, dass die oberen Enden der Haltemittel eine Ebene bilden, in der kein Haltemittel nach oben herausragt oder nach unten abfällt. Es ist indes nicht notwendig, dass die Führungsschiene auf jedem Haltemittel fixiert wird. Es ist beispielsweise ausreichend, wenn die Führungsschiene nur auf jedem zweiten oder dritten oder einer anderen Anzahl Haltemittel fixiert wird. Dennoch kann die Führungsschiene auch auf jede in der Ebene liegenden Haltemittel fixiert werden.

Nach einer besonders vorteilhaften Ausführungsform des Verfahrens werden die Haltemittel an einer Lehre fixiert in den Grundkörper eingegossen, wobei die oberen Enden der Haltemittel dabei in einer Ebene angeordnet sind. Mit der Fixierung der Haltemittel an der Lehre kann auf einfache Art und Weise bereits schon beim Einbau bzw. Eingiessen der Haltemittel in den Grundkörper eine Ebene geschaffen werden, die den Anforderungen des Präzisionsmaschinenbaus und damit der Führungsschiene gerecht wird. Durch die Fixierung der Haltemittel mit den oberen Enden an der Lehre ist es auch nicht entscheidend, ob die Haltemittel allesamt dieselbe Länge aufweisen. Abweichungen sind hier durchaus möglich, sofern die oberen Enden in einer Ebene angeordnet sind. Insofern auf möglichst gleiche zylindrische Haltemittel verzichtet werden kann, sind diese in der Beschaffung bzw. Herstellung billig, da auf ein hochpräzises Herstellungsverfahren verzichtet werden kann.

Eine Vorrichtung zur Lösung der eingangs genannten Aufgabe weist die Merkmale des Anspruchs 12 auf. Danach steht das Haltemittel zumindest teilweise über eine Oberfläche des Grundkörpers hervor. Dadurch ist das Bauteil oberhalb der Oberfläche des Grundkörpers angeordnet. Die Länge, die aus dem Grundkörper hervorragt ist wenige Millimeter lang. Der überwiegende Teil des Haltemittels ist in den Grundkörper angeordnet, um dem Haltemittel zur Aufnahme des Bauteils genügend Halt zu geben. Zur besseren Verzahnung mit dem Grundkörper weist das Haltemittel eine raue oder mit Zurücknehmungen versehende Oberfläche im Bereich des Grundkörpers auf.

Gemäss einer vorteilhaften Ausgestaltung sind vorzugsweise mehrere Haltemittel in dem Grundkörper nebeneinander angeordnet, insbesondere in diesen eingegossen. Zur Aufnahme von länglichen oder grösseren Bauteilen bedarf es mehrerer Haltemittel, die in Abhängigkeit der Ausgestaltung des Bauteils über die Oberfläche des Grundkörpers in diesem angeordnet sind.

Vorteilhafterweise sind die Haltemittel beabstandet zueinander in etwa senkrecht zu der Oberfläche in dem Grundkörper angeordnet. Aufgrund eines Wärmeausdehnungskoeffizienten eines Haltemittelmaterials berühren sich die Haltemittel nicht gegeneinander, womit unvorhersehbare Verschiebungen der Haltemittel in dem Grundkörper vermieden werden. Vorteilhafterweise sind die Haltemittel insbesondere zylindrisch ausgebildet, womit eine Oberfläche des Zylinders bei senkrechter Stellung zur Grundkörperoberfläche in etwa parallel liegt. Mit der Parallelität beider Oberflächen zueinander ist so eine Grundfläche für die Ausrichtung des Bauteils auf dem Haltemittel geschaffen.

Besonders vorteilhaft sind die oberen Enden der Haltemittel in etwa gleich zur Oberfläche des Grundkörpers beabstandet und bilden eine Ebene. Die Haltemittel sind vorzugsweise in etwa gleich in den Grundkörper der Vorrichtung eingegossen, so dass zur Aufnahme eines länglichen Bauteils die Haltemittel das Bauteil gleichmässig abstützen. Durch die gleichmässige Anordnung der Haltemittel kann auf eine Nachbehandlung durch Fräsen oder Abschleifen verzichtet werden.

Die Haltemittel sind aus Aluminium, Stahl oder einer anderen metallischen Legierung gebildet. Hierdurch ist eine sichere Verbindung des Bauteils mit dem Grundkörper gesichert, wobei vorzugsweise ein Verbindungselement zwischen Bauteil und Haltemittel aus einem Material des Haltemittels gefertigt ist.

Gemäss einer besonders vorteilhaften Ausgestaltung der Erfindung sind die Haltemittel nach dem Eingiessen in den Grundkörper im Bereich der oberen Enden abgeschliffen oder gefräst zur Bildung einer durch die oberen Enden verlaufenden Ebene. Aufgrund nicht immer präziser Einbautechniken bilden die nebeneinander und beabstandet zueinander angeordneten Haltemittel keine plane Ebene. Deshalb sind die Haltemittel aus einem abrasiven Material gebildet, so dass die Haltemittel zur Aufnahme des Bauteils abgeschliffen sind. Aufgrund des Abstandes der oberen Enden der Haltemittel zur Oberfläche des Grundkörpers werden auch nur ausschliesslich die Haltemittel abgeschliffen, so dass über eventuelle Unförmigkeiten der Oberfläche des Grundkörpers hinweggesehen werden kann.

Weiterhin wird nach einer vorteilhaften Ausführungsform das Bauteil, das eine Führungsschiene ist, auf den oberen Enden der Haltemittel angeordnet und auf diesen zumindest teilweise fixiert. Die Haltemittel, die nebeneinander angeordnet sind, sind zudem auch nahezu fluchtend angeordnet. Auf die eine Ebene bildenden Enden der Haltemittel wird die Führungsschiene gleichmässig durch die Haltemittel getragen. In Abhängigkeit der Belastung der Führungsschiene ist diese an jedem, an jedem zweiten, an jedem dritten oder nur vereinzelt an den Haltemitteln fixiert.

Weiterhin nach einer besonders bevorzugten Ausgestaltung, sind die Haltemittel an einer Lehre fixiert in den Grundkörper eingiessbar. Dabei sind die oberen Enden an einer Ebene angeordnet, so dass nach dem Härten des Grundkörpermaterials die oberen Enden ebenfalls eine Ebene bilden. Auf eine Nachbehandlung durch Abfräsen oder Abschleifen kann somit verzichtet werden, zumindest kann der Arbeitsgang erheblich eingeschränkt sein.

Der Grundkörper ist aus Mineralguss gebildet, was dem Grundkörper die nötige Bearbeitbarkeit und Schwere gibt. Neben einem Bindemittel aus Kunststoff, wie beispielsweise Polymer oder Epoxidharz, weist der Mineralguss einen Füllstoff aus einer Mischung aus Steinen oder gebrochenem Gestein auf.

Weitere vorteilhafte Ausgestaltungen des Verfahrens und der Vorrichtung ergeben sich aus den Unteransprüchen.

Ein bevorzugtes Ausführungsbeispiel der Erfindung wird nachfolgend anhand der Zeichnung näher erläutert. In dieser zeigen:
- Fig. 1: einen seitlichen Schnitt durch einen Mineralgusskörper mit Haltemittel und Führungsschiene,
- Fig. 2: eine seitliche Ansicht eines Mineralgusskörpers mit montierter Führungsschiene,
- Fig. 3: eine Draufsicht auf einen Mineralgusskörper mit montierter Führungsschiene,
- Fig. 4: eine Draufsicht auf einen Mineralgusskörper ohne Führungsschiene, mit nebeneinander angeordneten Haltemitteln, und
- Fig. 5: eine perspektivische Ansicht eines Mineralgusskörpers mit montierter Führungsschiene.

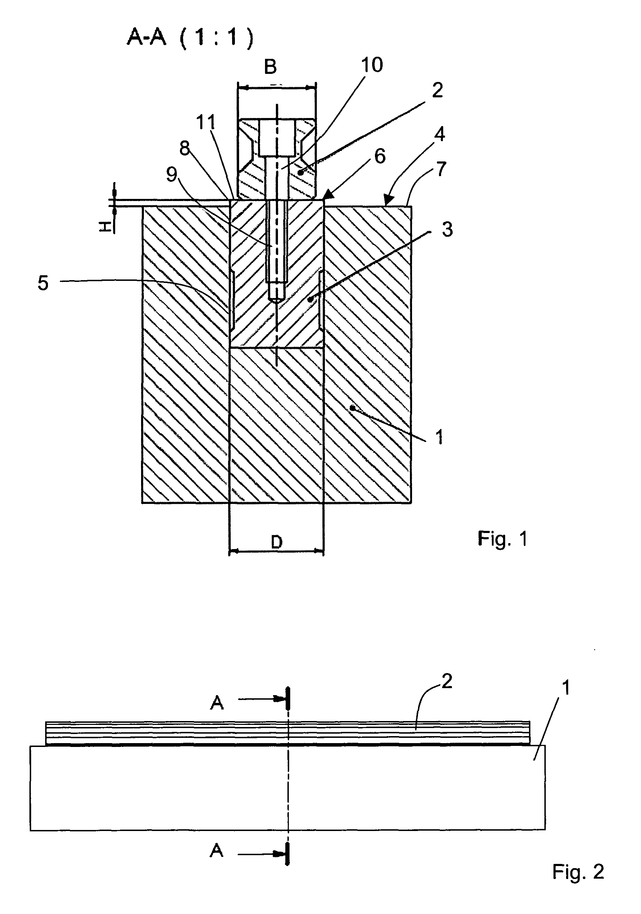

Die Erfindung ist beispielhaft in Fig. 1 dargestellt, die einen Schnitt durch einen Mineralgusskörper 1 zeigt mit über dem Mineralgusskörper 1 angeordneter Führungsschiene 2 eines Linearführungssystems. In dem Mineralgusskörper 1 ist ein Haltemittel 3 positioniert, auf dem die Führungsschiene 2 montiert ist.

Anders als in der Fig. 1 dargestellt, kann der Mineralgusskörper 1 jegliche Form aufweisen. Beispielhaft ist der Mineralgusskörper 1 in den Zeichnungen als ein Quader dargestellt. Im Bereich einer oberen Seitenfläche 4 des Mineralgusskörpers 1 ist eine Ausnehmung 5 angeordnet, in der das Haltemittel 3 positioniert ist. Die Ausnehmung 5 entspricht dabei im Wesentlichen den innerhalb des Mineralgusskörpers 1 befindlichen Konturen des Haltemittels 3. Das Haltemittel 3 ist mit dem Mineralgusskörper 1 fest verbunden. Dafür weist das Haltemittel 3 in alternativen, nicht dargestellten Ausführungsformen, Hinterschneidungen, Zurücknehmungen oder Ausnehmungen auf, in die ein Material des Mineralgusskörpers 1 eingreift.

Das Haltemittel 3 steht mit einem oberen Ende 6 über eine Oberfläche 7 des Mineralgusskörpers hervor. Die Oberfläche 7 entspricht dabei im Wesentlichen der oberen Seitenfläche 4 des Mineralgusskörpers 1. Der Abstand einer oberen Kante 8 des Haltemittels 3 zur Oberfläche 7 des Mineralgusskörpers 1 beträgt nur wenige Millimeter. Insbesondere ragt das Haltemittel 3 2 bis 5 mm aus dem Mineralgusskörper 1 heraus.

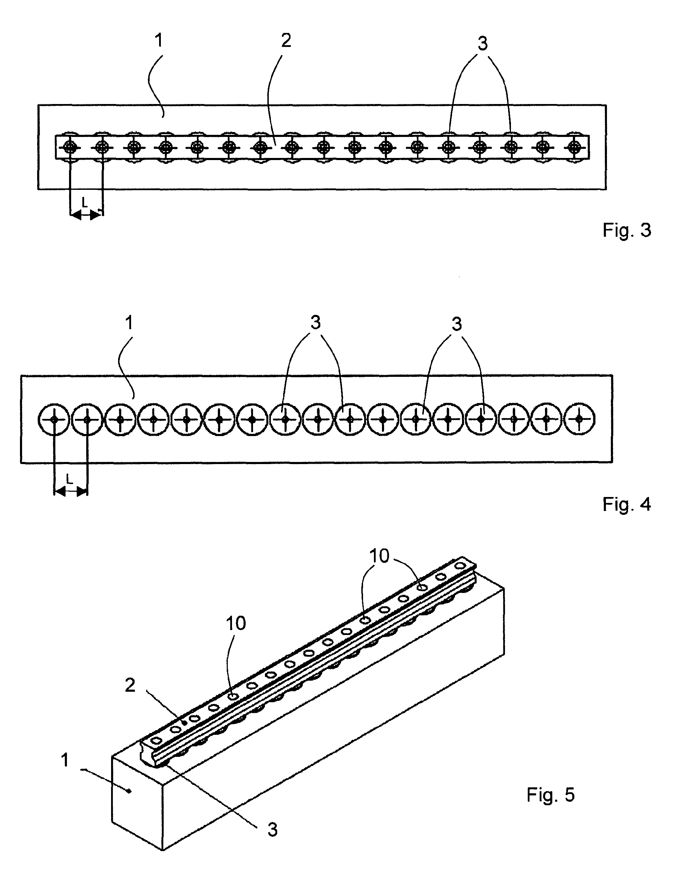

Das Haltemittel 3 ist aus Aluminium, Stahl oder anderen metallischen Legierungen gebildet. Zudem ist das Haltemittel 3, wie aus den Fig. 1 und 4 ersichtlich, von zylindrischer Form mit paralleler Grund- und Deckfläche. Der runde Querschnitt des Zylinders hilft Spannungen, die in dem Mineralgusskörper 1 oder in dem Haltemittel 3 selbst auftreten, zu verhindern.

Auf dem Haltemittel 3 ist die Führungsschiene 2 angeordnet, die über ein nicht dargestelltes Verbindungsmittel mit dem Haltemittel 3 verbunden ist. Das Haltemittel 3 weist für die Verbindung mit der Führungsschiene 2 eine zentrierte Ausnehmung 9 auf mit Innengewinde. Die Führungsschiene 2 weist dementsprechend an einer geeigneten Stelle ebenfalls eine Ausnehmung 10 auf, durch die ein Befestigungsmittel hindurchsteckbar ist. Die Grösse der Ausnehmungen 9 und 10 ist abhängig von der Grösse der Führungsschiene 2.

Ebenso ist ein Aussendurchmesser des zylindrischen Haltemittels 3 abhängig von der Führungsschiene 2. Vorzugsweise ist der Aussendurchmesser eine Funktion einer Breite der Führungsschiene 2. Minimal gilt die Abhängigkeit, dass D ≥ B ist. D ist der Aussendurchmesser des Haltemittels 3 und B die Breite der Führungsschiene 2. Die in der Fig. 1 dargestellte Führungsschiene 2 ist schmaler als der Durchmesser des Haltemittels 3, wobei die vorbenannte Formel garantiert, dass die Führungsschiene 2 nicht über den Durchmesser und damit die obere Kante 8 des Haltemittels 3 nach aussen übersteht.

Wie aus den Fig. 3, 4 und 5 ersichtlich, sind in dem länglichen Mineralgusskörper 1 mehrere nebeneinander angeordnete Haltemittel 3 positioniert. Die Haltemittel 3 bilden eine Linie, sind also fluchtend in dem Mineralgusskörper 1 nebeneinander angeordnet. Zusätzlich sind die Haltemittel 3 auch beabstandet voneinander angeordnet. Die Haltemittel 3 greifen vollflächig in dem Mineralgusskörper 1 in das Material des Mineralgusskörpers 1 ein. Zwischen den Haltemitteln 3 ist also jeweils Material des Mineralgusskörpere 1, damit sich die Haltemittel 3 nicht berühren. Der Abstand zwischen den Haltemitteln 3 ist der thermischen Ausdehnung der Haltemittel 3 und/oder des Gussmaterials geschuldet. Würden die Haltemittel 3 andere Querschnitte aufweisen, als die zylindrisch runden, würden unvorhersehbare Spannungen in einem Verbund von Mineralgusskörper 1, Haltemittel 3 und Führungsschiene 2 auftreten. Zur zusätzlichen Vermeidung von form- und materialbedingten Nachteilen der Haltemittel 3 in dem Mineralgusskörper 1 ist der Abstand zwischen zwei Haltemitteln 3 definiert. Dieser Abstand ist abhängig von der montierten Führungsschiene 2. Der Abstand beträgt mindestens L = D + 3 mm. L ist der Abstand zwischen den jeweiligen Mitten zweier nebeneinander angeordneter Haltemittel 3 und D der Durchmesser der Haltemittel 3.

Jedes Haltemittel 3 ist mit einer zentralen Ausnehmung 9 mit Gewinde ausgeführt zur Aufnahme eines Verbindungsmittels, über das die Führungsschiene 2 mit dem Mineralgusskörper 1 verbunden wird. Zur Fixierung der Führungsschiene 2 an den Haltemitteln 3 ist es jedoch nicht notwendig, dass die Führungsschiene 2 an jedem Haltemittel 3 angelenkt ist. So kann die Reihe an benachbarten Haltemitteln 3 auch nur als Auflage für die Führungsschiene 2 dienen, ohne dass die Führungsschiene 2 an den Haltemitteln 3 fixiert ist. Auch kann es vorteilhaft sein, wenn die Führungsschiene nur an jedem zweiten, dritten oder jedem x-ten Haltemittel 3 angelenkt ist.

Die Haltemittel 3 werden auch als Einsätze oder Inserts bezeichnet.

Nachfolgend soll anhand der Zeichnung das erfinderische Verfahren beschrieben werden. Der Mineralgusskörper 1, auch als Grundkörper bezeichnet, wird mittels eines Gussverfahrens hergestellt. Das Material des Mineralgusskörpers 1 besteht aus einem Bindemittel und einem Füllstoff. Als Bindemittel wird in der Regel Kunststoff eingesetzt, wie beispielsweise Polymer oder Epoxidharz. Andere Kunststoffe kommen darüber hinaus auch zum Einsatz. Als Füllstoff dient gewöhnlich eine Mischung aus Steinen oder gebrochenem Gestein. In Abhängigkeit von den geforderten Eigenschaften des Mineralgusskörpers 1 können die Mischungsverhältnisse des Bindemittels und Füllstoffs variieren.

Zur Einbettung der Haltemittel 3 in den Grundkörper werden die Haltemittel 3 während des Gussverfahrens in einer Stellung angeordnet, die der späteren Stellung in dem ausgehärteten Mineralgusskörper 1 entspricht. Erfindungsgemäss werden demnach die Ausnehmungen 5 für die Haltemittel 3 nicht erst nach Aushärten des Mineralgusskörpers 1 in denselbigen eingebracht. Die Positionierung der Haltemittel 3 während des Gussverfahrens ist so gewählt, dass die oberen Enden 6 über die Oberfläche 7 des Mineralgusskörpers 1 hervorstehen. Mit der Herstellung des Mineralgusskörpers 1 werden gleichzeitig alle vorgesehenen Haltemittel 3 in den Grundkörper eingegossen. Die Positionierung der Haltemittel 3 in dem Bereich des Grundkörpers kann einerseits vereinzelt erfolgen, was eine individuelle Positionierung der jeweiligen Haltemittel 3 zur Folge hat. Besonders vorteilhaft wird aber zur Positionierung der Haltemittel 3 eine Lehre eingesetzt, an welche die Haltemittel 3 angelenkt sind. Die Ausrichtung der Haltemittel 3 in vertikaler und horizontaler Richtung ist für die Auflagerung der Führungsschiene 2 auf den Haltemitteln 3 entscheidend. Eine zur Führungsschiene 2 gerichtete Oberfläche 11 der Haltemittel 3 bilden im montierten Zustand der Führungsschiene 2 eine Ebene, so dass die Führungsschiene 2 plan auf allen Oberflächen 11 der Haltemittel 3 aufliegt. Zur Herstellung dieser Auflagefläche werden die Haltemittel bereits schon während des Gussverfahrens präzise ausgerichtet. Durch die Ankopplung der Haltemittel 3 an die Lehre können die Oberflächen 11 der jeweiligen Haltemittel 3 bereits schon mit einer akzeptablen Präzision in dem Grundkörper des Mineralgusskörpers 1 ausgerichtet werden.

Nach dem Aushärten des Materials des Mineralgusskörpers werden die oberen Enden der Haltemittel 3 nachbearbeitet, was in Abhängigkeit der durch die Haltemittel 3 erzeugten Ebene geschieht. Je genauer die Positionierung der Haltemittel 3 in dem noch flüssigen Material des Mineralgusskörpers 1 erfolgt, fällt die Nachbearbeitung umfangreicher oder weniger umfangreich aus. Auf einer Nachbearbeitung kann dann verzichtet werden, wenn die Oberflächen 11 der Ausnehmungen 3 bereits nach dem Aushärten des Mineralgusskörpers eine plane Ebene bilden. Die Oberflächen 11 der Haltemittel 3 werden während der Nachbearbeitung abgefräst oder abgeschliffen, womit alle Haltemittel 3 auf ein Niveau gebracht werden.

Die Nachbearbeitung der Haltemittel 3 (z.B. mittels Abschleifen oder Fräsen) hat den Vorteil, dass zur Aufnahme der Führungsschiene 2 nicht die Oberfläche 7 des Mineralgusskörpers 1 grossflächig bearbeitet werden muss. Es reicht aus, jeweils nur die Haltemittel 3 zu bearbeiten. Somit ergibt sich aus der Anordnung der Haltemittel 3 in dem Mineralgusskörper eine einfache Möglichkeit, den Nachbearbeitungsaufwand zur Erzeugung einer ebenen Fläche für die Auflage der Führungsschiene 2 zu verringern.

Darüber hinaus wird mit der Fixierung der Haltemittel 3 an der Lehre ein weiterer Vorteil erzielt. Mit dem Eingiessen der Haltemittel 3 und der genauen Ausrichtung der Oberflächen 11 der Haltemittel 3 ist keine allzu hohe Präzision an die Haltemittel 3 gestellt. Es spielt demnach keine Rolle, ob das eine oder andere Haltemittel 3 länger oder kürzer ist, sofern der Abschnitt, der aus dem Mineralgusskörper hervorragt, mit den Abschnitten der jeweilig benachbarten Haltemittel 3 korrespondiert, also in einer Ebene liegt. Somit können auch weniger genau bearbeitete zylindrische Körper für die Haltemittel zum Einsatz gebracht werden, die darüber hinaus auch billiger in der Herstellung sind.

## Patentansprüche

1. Verfahren zur Herstellung einer Befestigungsstruktur für ein Bauteil (2), wobei in einem im Gussverfahren herzustellenden Grundkörper (1) wenigstens ein Haltemittel (3) für das Bauteil (2) in dem Grundkörper (1) angeordnet wird, **dadurch gekennzeichnet, dass** das Haltemittel (3) zumindest teilweise über eine Oberfläche (7) des Grundkörpers (1) hervorsteht.

2. Verfahren nach Anspruch 1, **dadurch gekennzeichnet, dass** in den Grundkörper (1) das Haltemittel (3), vorzugsweise mehrere nebeneinander angeordnete Haltemittel (3), eingegossen wird.

3. Verfahren nach Anspruch 1 oder 2, **dadurch gekennzeichnet, dass** die nebeneinander angeordneten Haltemittel (3) beabstandet sind.

4. Verfahren nach einem der vorhergehenden Ansprüche 1 bis 3, **dadurch gekennzeichnet, dass** die Haltemittel (3) zylindrisch sind und in etwa senkrecht zu der Oberfläche (7) des Grundkörpers angeordnet werden.

5. Verfahren nach einem der vorhergehenden Ansprüche 1 bis 4, **dadurch gekennzeichnet, dass** die Haltemittel (3) zumindest teilweise um die gleiche Länge über die Oberfläche (7) des Grundkörpers hervorstehen.

6. Verfahren nach einem der vorhergehenden Ansprüche 1 bis 5, **dadurch gekennzeichnet, dass** obere Enden (6) der über die Oberfläche (7) des Grundkörpers hervorstehenden Haltemittel (3) eine Ebene bilden.

7. Verfahren nach einem der vorhergehenden Ansprüche 1 bis 6, **dadurch gekennzeichnet, dass** die Haltemittel (3) aus Aluminium, Stahl oder anderen metallischen Legierungen gebildet sind.

8. Verfahren nach einem der vorhergehenden Ansprüche 1 bis 7, **dadurch gekennzeichnet, dass** die Haltemittel (3) nach dem Eingiessen in den Grundkörper an ihren oberen Enden (6) abgeschliffen oder gefräst oder auf andere Weise nachbearbeitet werden zur Bildung einer Ebene.

9. Verfahren nach einem der vorhergehenden Ansprüche 1 bis 8, **dadurch gekennzeichnet, dass** das Bauteil eine Führungsschiene (2) ist, wobei die Führungsschiene (2) auf den oberen Enden (6) der Haltemittel (3) angeordnet wird und auf diesen zumindest teilweise fixiert wird.

10. Verfahren nach einem der vorhergehenden Ansprüche 1 bis 9, **dadurch gekennzeichnet, dass** die Haltemittel (3) an einer Lehre fixiert in den Grundkörper eingegossen werden, wobei die oberen Enden (6) dabei in einer Ebene angeordnet sind.

11. Verfahren nach einem der vorhergehenden Ansprüche 1 bis 10, **dadurch gekennzeichnet, dass** der Grundkörper aus Mineralguss gegossen wird.

12. Vorrichtung zur Befestigung eines Bauteils (2), wobei in einem gegossenen Grundkörper (1) wenigstens ein Haltemittel (3) angeordnet ist zur Aufnahme des Bauteils, **dadurch gekennzeichnet, dass** das Haltemittel (3) zumindest teilweise über eine Oberfläche (7) des Grundkörpers (1) hervorsteht.

13. Vorrichtung nach Anspruch 12, **dadurch gekennzeichnet, dass** vorzugsweise mehrere Haltemittel (3) in dem Grundkörper
(1) nebeneinander angeordnet sind, insbesondere in diesen eingegossen sind.

14. Vorrichtung nach Anspruch 13, **dadurch gekennzeichnet, dass** die Haltemittel (3) beabstandet zu einander in etwa senkrecht zu der Oberfläche (7) in dem Grundkörper angeordnet sind, wobei die Haltemittel (3) insbesondere zylindrisch ausgebildet sind.

15. Vorrichtung nach einem der vorhergehenden Ansprüche 1 bis 14, **dadurch gekennzeichnet, dass** obere Enden (6) der Haltemittel (3) in etwa gleich zur Oberfläche (7) des Grundkörpers beabstandet sind und eine Ebene bilden.

16. Vorrichtung nach einem der vorhergehenden Ansprüche 1 bis 15, **dadurch gekennzeichnet, dass** die Haltemittel (3) aus Aluminium, Stahl oder einer anderen metallischen Legierung gebildet sind.

17. Vorrichtung nach einem der vorhergehenden Ansprüche 1 bis 16, **dadurch gekennzeichnet, dass** die Haltemittel (3) nach dem Eingiessen in den Grundkörper im Bereich der oberen Enden (6) abgeschliffen oder gefräst oder auf andere Weise nachbearbeitet sind zur Bildung einer durch die oberen Enden (6) verlaufenden Ebene.

18. Vorrichtung nach einem der vorhergehenden Ansprüche 1 bis 17, **dadurch gekennzeichnet, dass** das Bauteil eine Führungsschiene (2) ist, wobei die Führungsschiene (2) auf den oberen Enden (6) der Haltemittel (3) angeordnet ist und auf diesen zumindest teilweise fixiert ist.

19. Vorrichtung nach einem der vorhergehenden Ansprüche 1 bis 18, **dadurch gekennzeichnet, dass** die Haltemittel (3) an einer Lehre fixiert in den Grundkörper eingiessbar sind, wobei die oberen Enden (6) in einer Ebene angeordnet sind.

20. Vorrichtung nach einem der vorhergehenden Ansprüche 1 bis 19, **dadurch gekennzeichnet, dass** der Grundkörper aus Mineralguss gebildet ist.
